# EUROPÄISCHE PATENTSCHRIFT

(11) **EP 1 667 945 B1**
(45) Veröffentlichungstag und Bekanntmachung des Hinweises auf die Patenterteilung: **13.08.2008**
(21) Anmeldenummer: 04790087.3
(22) Anmeldetag: 01.10.2004
(51) Int. Cl.: C04B 41/49, C04B 41/52

(54) **VERFAHREN ZUM VERSIEGELN EINER OBERFLÄCHE**
METHOD FOR SEALING A SURFACE
PROCEDE POUR ETANCHEIFIER UNE SURFACE

(30) Priorität: 02.10.2003 DE 10346018
(43) Veröffentlichungstag der Anmeldung: 14.06.2006
(73) Patentinhaber: NANOQUADRAT GMBH, 84051 Essenbach-Altheim (DE)
(72) Erfinder: INTERWIES, Jan, 84034 Landshut (DE)
(74) Vertreter: Kuhnen & Wacker
(86) Internationale Anmeldenummer: PCT/EP2004/011001
(87) Internationale Veröffentlichungsnummer: WO 2005/033045

(56) Entgegenhaltungen:
- EP-A- 0 914 873
- EP-A- 1 221 469
- US-B1- 6 379 448

## Beschreibung

Die Erfindung betrifft ein Verfahren zum Versiegeln einer Oberfläche, insbesondere einer Platte, insbesondere einer keramischen oder Naturstein-Platte, bei dem ein mit Valenzen an der Oberfläche eine Bindung eingehendes Material auf die Oberfläche aufgebracht wird.

Verfahren dieser Art sind durch Benutzung bekannt. Das aufgesprühte Material haftet auf der Oberfläche und setzt sich in Poren und andere Vertiefungen. Es ist wasserund schmutzabweisender als die ursprüngliche Oberfläche; ein Boden- oder Wandbelag kann dann leichter sauber gehalten werden und bleibt eher frei von unentfernbaren Flecken. Ein vollständiger Schutz vor Flecken wird jedoch nicht erzielt, zumal Poren mehr oder weniger nur ausgekleidet und nicht ganz entfernt werden.

Die US 6,379,448 B1 offenbart die Erzeugung einer wasserabweisenden Schicht auf einen silikatischen Substrat, bevorzugt einen Glassubstrat, mit wenigstens einer fluoraliphatischen Silanverbindung, wobei wenigstens ein Siliziumatom chemisch an das Substrat gebunden ist. Ferner wird das arbeiten bei niedrigen Temperaturen gelehrt, um so mögliche Vernetzungsreaktionen von Silanderivaten möglichst zu vermeiden und eine Bildung von größeren Oligomeren in der Zusammensetzung vor dem Aufbringen auf das Substrat zu verhindern.

Die EP 1 221 469 A2 betrifft ebenfalls ein Beschichtungsmittel und offenbart das Aufbringen desselben bei Raumtemperatur. Eine Anwendung von erhöhtem Druck und erhöhter Temperatur beim Aufbringen des Materials zum Versiegeln der Oberfläche wird nicht offenbart.

Die EP 0 914 873 A2 betrifft ebenfalls ein Verfahren und eine Vorrichtung zum Aufbringen einer Beschichtung bei Raumtemperatur und offenbart bestenfalls eine nachträgliche Wärmebehandlung. Einen Hinweis auf die Anwendung von erhöhtem Druck und erhöhter Temperatur ist diesem Dokument ebenfalls nicht zu entnehmen.

Der Erfindung liegt die Aufgabe zugrunde, eine in besonders hohem Maße wirksame und dauerhafte Versiegelung zu schaffen.

Diese Aufgabe wird vorliegend durch Angabe eines Verfahrens mit den Merkmalen von Anspruch 1 gelöst. Vorteilhafte Ausgestaltungen desselben sind Gegenstand der abhängigen Ansprüche.

Gemäß der Erfindung wird dieser Zweck erfüllt, indem das Material maschinell auf der Oberfläche verrieben wird.
Auf geschlifferien, angeschliffenen oder polierten Oberflächen wird das Material unter höherem Druck verrieben.

Die neue Verfahrensweise schöpft erstens durch den Druck unmittelbar und zweitens durch die mit dem Druck erzeugte erhebliche Reibungswärme die Bindungsmöglichkeiten an der zu versiegelnden Oberfläche vollständig aus. Alle gewünschten Reaktionen, auch innerhalb des Versiegelungsmaterials, werden gefördert. Die Wärme entsteht dabei gerade dort, wo sie gebraucht wird, und, äußerst kurzfristig, zu dem Zeitpunkt, an dem sie gebraucht wird. Störungen durch vorheriges starkes Aufheizen der Platten werden vermieden. Vor dem Aufbringen des Materials werden die Platten beispielsweise nur auf 40 bis 50°C angewärmt.
Auch rein mechanisch kommt eine weitergehende Füllung von Vertiefungen zustande; an porösen Oberflächen werden die Poren vollständiger gefüllt.

Wesentlicher weiterer Vorteil ist eine Einsparung an Versiegelungsmaterial. Das Material braucht nur in geringer Menge aufgetragen zu werden. Im Gegensatz zu Sprühen ist der Auftrag weitgehend verlustfrei möglich.
Wesentlicher Vorteil ist schließlich, dass das Aussehen der Oberfläche nicht verändert wird. Ein ursprünglicher Glanz bleibt erhalten. Er wird nicht, wie nach dem Stand der Technik, durch einen Silikonfilm oder Wachsfilm gemindert.

Es wird eine Reibungswärme erzeugt, mit der sich die Temperatur einer etwa 8 mm dicken Platte um 10 bis 30°C erhöht (später an der Oberfläche gemessen). Unter diesen, als indirektes Maß für die nicht messbare während des Reibungsvorganges an der Oberfläche entstehende Temperatur angegebenen, Umständen erhält man eine günstige Reaktionstemperatur, bei der das Material außerdem auch in feine Poren eindringt.

Nach einer besonders vorteilhaften Ausgestaltung der Erfindung wird das Material in flüssiger bis cremiger Form aufgebracht und auf der Oberfläche ausgebreitet und erst nach leichtem Antrocknen verrieben.

Das Auftragen in der flüssigen bis cremigen Konsistenz sichert eine im wesentlichen lückenlose Bedeckung der Oberfläche. Poren werden schon weitgehend gefüllt. Das Verreiben erst nach dem leichten Antrocknen schließt aus, dass durch das Verreiben Material in wesentlicher Menge nach der Seite verdrängt wird und dann auf der Oberfläche fehlt. Auch ist die Kraftübertragung durch das leicht angetrocknete Material größer, so dass es stärker an die Oberfläche wie auch in sich gepresst wird.

Bei dem ersten Schritt füllt das noch fließfähige und noch stärker benetzende Material die Poren bis in die Tiefe und auch die kleineren Poren, in die später das trockenere Material nur schwerer hineingetrieben werden kann. Bei dem zweiten Schritt werden die Poren, soweit durch das Antrocknen wieder Hohlräume .darin entstanden sind, nachgefüllt, und sie werden an der Oberfläche fest verschlossen.

Für die vorstehende spezielle Verfahrensweise ist die Erzeugung der erforderlichen Reaktionswärme durch die Reibung besonders vorteilhaft. Auf einer schon vorher auf die nötige Temperatur geheizten Platte würden bereits beim Aufbringen und Ausbreiten des Materials, noch bevor es die Poren und anderen Vertiefungen richtig ausgefüllt hat, schnelle Reaktionen ohne befriedigende Bindewirkung ablaufen und würde dann beim Verreiben eine entsprechende Reaktionsfähigkeit fehlen.

Unter dem im wesentlichen nur für das Ausbreiten erforderlichen Druck und nur leicht angehobener Temperatur erfährt das Material hingegen eine geeignete Vorbereitung und Konditionierung für das nachfolgende Verreiben unter stärkerem Druck.

Als Material vorgesehen ist vorzugsweise ein in einem flüchtigen Lösungsmittel gelöstes Bindemittel, ggf. mit nicht reaktivem körnigen Füllmaterial im Nano-Bereich, ggf. bis zum Mikro-Bereich.

Das flüchtige Lösungsmittel, beispielsweise ein Alkohol in einer Menge von z.B. 40 bis 50%, lässt in einer Fertigung das Material schnell genug zwischen dem Aufbringen und Ausbreiten und dem Verreiben antrocknen. Auch in dem leicht angetrockneten Zustand, in dem nur noch wenig Lösungsmittel, ggf. in Mischung mit Wasser, vorhanden ist, benetzt dann außerdem das Material die Oberfläche besser als z.B. eine wässrige Suspension oder Lösung und erleichtert damit das Eindringen des Materials in feinere Poren.

Ob Füllmaterial zugegeben wird und in welchen Korngrößen, richtet sich nach der Topographie und vor allem der Porenstruktur und -größe der zu versiegelnden Oberfläche. Nano-Partikel können auch in feine Poren eingelagert werden, Mikro-Partikel in größere. Für eine glasierte Oberfläche wird man in der Regel kein Füllmaterial vorsehen. Als Füllmaterial kommen in erster Linie SiO₂ und Al₂O₃ und Teflon im Falle heller Oberflächen und SiC im Falle dunkler Oberflächen in Betracht, aber auch vieles andere. In der Regel wird man einen möglichst dichten Körnungsaufbau anstreben.

Nach einer besonders vorteilhaften Weiterbildung der Erfindung enthält das Material als Bindemittel mindestens ein Hybrid-Polymer, das sich unter Bildung einer glasartigen Masse umsetzt.

Poren und andere Vertiefungen werden mit diesem Material bei dem Verreiben unter hohem Druck vollständig ausgefüllt und dauerhaft verschlossen. Besonders wichtig ist dabei, dass der Überschuss des zur Hydrolysierung des Hybrid-Polymers benötigten Wassers mindestens weitgehend in der glasartigen Masse gebunden wird und sich das restliche Lösungsmittel schon während des Füllens der Poren verflüchtigt, so dass nicht anschließend doch noch einmal, wenn auch kleinere, Poren durch Entweichen von größeren Mengen Wasser und/oder Lösungsmittel entstehen.

Die so erhaltene Füllung der Vertiefungen wird nicht später durch lösungsmittelhaltige Reinigungsmittel o. dgl. auf die Dauer herausgelöst. Insbesondere geschliffene oder polierte keramische oder Naturstein-Oberflächen erhalten damit eine hoch wirksame und beständige Versiegelung, auf der auch kritische Verunreinigungen keine unentfernbaren Flecken bilden.
Die glasartige Masse ist im übrigen besonders geeignet als Matrix für Füllmasse-Körner.

Vorzugsweise enthält das Material als Bindemittel ein Silanol. Silanole sind bewährte Haftvermittler.

Zweckmäßigerweise wird dann das Bindemittel durch Hydrolysieren mindestens eines Silans mittels mindestens einer wässrigen, z.B. 5 bis 10%igen, Säure hergestellt.

Die Art der Säure ist von minderer Bedeutung. Alle gängigen anorganischen oder organischen Säuren kommen in Frage. Das Wasser der wässrigen Säure bewirkt die Hydrolysierung des Silans zum Silanol. Die H-Jonen der Säure dienen dabei als Katalysator.

Noch einmal eine Weiterbildung der Erfindung besteht darin, das Material mittels Polierköpfen aus kunststoffgebundenen Mineral- und/oder Glasfasern und/oder
- körnern zu verreiben, z.B. aus Al₂O₃, SiC, SiO₂ und/oder einem Glas, wiederum auch in Abhängigkeit von der Farbe der zu versiegelnden Oberfläche.
   Bei dem hohen angewendeten Druck, bei dem die Polierköpfe gestaucht werden, reiben sich die Partikel oder Fasern ab. Der Abrieb bildet Füllmaterial in der Versiegelung. Er entsteht in besonderem Maße an den Rändern von Vertiefungen und wird dabei vornehmlich in die Vertiefungen eingedrückt.
   Zugleich versteift und verfestigt die Einlagerung die Polierköpfe und macht sie damit für die hohe Druckanwendung geeignet.

Die erfindungsgemäße Versiegelung ist auch bei anderen Gegenständen als Platten möglich und auch zur Abdichtung mit umgekehrter Wirkrichtung. Beispielsweise kann eine Terrakottaoberfläche, wegen ihrer Porosität mit möglichst hohem Druck, versiegelt werden und z.B. im Falle eines Pflanzentopfes zur Vermeidung von Ausblühungen die Oberfläche gegen Feuchtigkeit von innen abgedichtet werden.

Die Materialsynthese sei abschließend noch einmal allgemein ausgedrückt als die Hydrolyse oder Kondensation eines oder mehrerer Silane und/oder eines oder mehrerer Alkoxyde (Al, Ce, Ga, Ge, Sn, Ti, Zr, Hp, V, Nb, Ta), wobei insbesondere die Gruppen Alkyl- oder Arylsilane, aminofunktionelle Silane, epoxy- und glykolfunktionelle Silane, mercaptofunktionelle Silane, methacrylfunktionelle Silane, vinylfunktionelle Silane und Kieselsäureester in Betracht stehen.

Im folgenden sei die Erfindung anhand von Beispielen weiter erläutert.

### Beispiel 1

Versiegelung einer Natursteinoberfläche oder einer polierten Feinsteinzeug-Oberfläche:

15 g Ethanol werden mit 1,9 g Fluoralkylsiloxan 5 min lang verrührt. Danach werden unter starkem Rühren 2,5 g 10%ige Essigsäure zugegeben. Anschließend erfolgt in einem Reaktor bei 40°C 60 min lang eine Hydrolysierung. Hierauf werden unter starkem Rühren 0,5 g 2-Aminoethyl-3-aminopropyltrimethoxysilan, 8,0 g Octyltriethoxysilan und 2,5 g 10%ige Essigsäure zugegeben und 90 min lang in einem Ultra-Turrax-Mischer homogenisiert.
Anschließend erfolgen noch eine Zugabe und Verrühren von Füllmaterial, beispielsweise Teflon-Partikel einer zum Füllen kleinerer Poren geeigneten mittleren Größe von 150 bis 200 nm und Al₂O₃-Partikel mit einer Kornverteilung im Bereich von 2 bis 30 µm, die auch Eingang in größere Poren finden, in einer Gesamtmenge von 0,5 g.

Das Material wird in einer Menge von 1,5 g auf eine zu versiegelnde Oberfläche von 30 x 30 cm aufgetropft und unter leichtem Druck ausgebreitet.
Dazu dient in einer Fertigungslinie beispielsweise eine Station mit einer Gummiwalze oder einem rotierenden Teller mit einer Filz- oder Stoffbespannung. Der Vorgang dauert beispielsweise 1 sec.
Unmittelbar anschließend wird in einer weiteren Station das aufgetragene Material unter starkem Druck verrieben.

Hierzu dient z.B. eine Poliermaschine oder Wischmaschine bekannter Bauart mit einer Vielzahl rotierend an einer rotierenden Scheibe angeordneter Köpfe, die jedoch mit einem neuen Besatz aus harten, kunststoffgebundenen Faserschleifscheiben mit SiC-oder Al₂O₃-Fasern versehen werden. Dieser Vorgang nimmt beispielsweise 1 sec in Anspruch.

### Beispiel 2

Zusätzliche Versiegelung einer glasierten Oberfläche:
20 g Dodecafluoralkyltriethoxysilan werden mit 20 g Wasser verdünnt und unter starkem Rühren mit 10 g 10 Gew.-%iger Ameisensäure für 30 Minuten gemischt.
Die erhaltene Lösung wird auf die zu versiegelnde Oberfläche aufgebracht. Die Oberfläche mit dem Auftrag wird unter Druck poliert. Der Auftrag wird ausgehärtet. Er füllt die Wellentäler, die auch eine Glasur aufweisen kann.

## Patentansprüche

1. Verfahren zum Versiegeln einer Oberfläche, insbesondere einer Platte, insbesondere einer keramischen oder Naturstein-Platte, bei dem ein mit Valenzen an der Oberfläche eine Bindung eingehendes Material auf die Oberfläche aufgebracht wird,
bei dem das Material maschinell auf der Oberfläche verrieben wird, und
das Material auf einer geschliffenen, angeschliffenen oder polierten Oberfläche unter höherem Druck verrieben wird,
**dadurch gekennzeichnet,**
**dass** eine Reibungswärme erzeugt wird, mit der sich die Temperatur einer etwa 8 mm dicken Platte um 10 bis 30°C erhöht, und
**dass** die Platte vor dem Aufbringen des Materials angewärmt wird, vorzugsweise auf 40 bis 50°C.

2. Verfahren nach einem der Ansprüche 1,
**dadurch gekennzeichnet,**
**dass** das Material in flüssiger bis cremiger Form aufgebracht und auf der Oberfläche ausgebreitet wird und erst nach leichtem Antrocknen verrieben wird.

3. Verfahren nach einem der Ansprüche 1 oder2,
**dadurch gekennzeichnet,**
**dass** das Material in einem leicht flüchtigen Lösungsmittel ein Bindemittel, ggf. ferner ein nicht reaktives körniges Füllmaterial im Nano-Bereich, ggf. bis zum Mikro- Bereich, enthält.

4. Verfahren nach einem der Ansprüche 1 bis 3,
**dadurch gekennzeichnet,**
**dass** das Material als Bindemittel mindestens ein Hybrid-Polymer enthält.

5. Verfahren nach einem der Ansprüche 1 bis 4,
**dadurch gekennzeichnet,**
**dass** das Material ein durch Hydrolyse und Kondensation eines oder mehrerer Silane und/oder eines oder mehrerer Alkoxyde hergestelltes Bindemittel enthält.

6. Verfahren nach Anspruch 4 oder 5,
**dadurch gekennzeichnet,**
**dass** das Bindemittel durch Hydrolysieren mittels mindestens einer organischen oder anorganischen wässrigen Säure hergestellt wird.

7. Verfahren nach einem der Ansprüche 1 bis 6,
**dadurch gekennzeichnet,**
**dass** das Material mittels Polierköpfen aus kunststoffgebundenen Mineral- und/oder Glasfasern und/oder -körnern verrieben wird, vorzugsweise aus Al₂O₃ SiC, SiO₂ und/oder einem Glas.

## Claims

1. A method of sealing a surface, in particular a plate, in particular a ceramic or natural stone slab, in which a material involving a bond with valences at the surface is applied to the surface,
wherein the material is spread by rubbing on the surface by machine and the material is spread by rubbing under an elevated pressure on a ground, partially ground or polished surface,
**characterised in that**
a frictional heat is generated with which the temperature of a plate about 8 mm thick is increased by 10 to 30°C, and
the plate is heated before application of the material, preferably to 40 to 50°C.

2. A method according to claim 1 **characterised in that** the material is applied to fluid to creamy form and spread on the surface and spread by rubbing only after slight initial drying.

3. A method according to one of claims 1 and 2 **characterised in that** the material includes in an easily volatile solvent a binding agent, possibly also a nonreactive granular filling material in the nano range, possibly up to the micro range.

4. A method according to one of claims 1 to 3 **characterised in that** the material contains at least one hybrid polymer as the binding agent.

5. A method according to one of claims 1 to 4 **characterised in that** the material contains a binding agent produced by hydrolysis and condensation of one or more silanes and/or one or more alkoxides.

6. A method according to claim 4 or claim 5 **characterised in that** the binding agent is produced by hydrolysing by means of at least one organic or inorganic aqueous acid.

7. A method according to one of claims 1 to 6 **characterised in that** the material is spread by rubbing by means of polishing heads of plastic-bonded mineral and/or glass fibres and/or grains, preferably of Al₂O₃, SiC, SiO₂ and/or a glass.

## Revendications

1. Procédé pour étanchéifier une surface, notamment une plaque, notamment une plaque en céramique ou en pierre naturelle, dans lequel une matière contractant une liaison à la surface avec des valences est déposée sur la surface,
dans lequel la matière est étalée par frottement mécaniquement sur la surface et la matière est étalée par frottement sous pression plus élevée sur une surface meulée, rectifiée ou polie,
**caractérisé**
**en ce qu'**une chaleur de friction est produite, avec laquelle la température d'une plaque épaisse d'environ 8 mm augmente de 10 à 30°C, et
**en ce que** la plaque est chauffée avant le dépôt de la matière, de préférence à une température de 40 à 50°C.

2. Procédé selon l'une des revendications 1,
**caractérisé en ce que** la matière est déposée sous forme liquide à crémeuse et est répandue sur la surface et est étalée par frottement seulement après un léger séchage débutant.

3. Procédé selon l'une des revendications 1 ou 2,
**caractérisé en ce que** la matière contient, dans un solvant légèrement volatil, un liant, le cas échéant également une matière de charge granuleuse non réactive de l'ordre du nanomètre, le cas échéant allant jusqu'au micromètre.

4. Procédé selon l'une des revendications 1 à 3,
**caractérisé en ce que** la matière contient comme liant au moins un polymère hybride.

5. Procédé selon l'une des revendications 1 à 4,
**caractérisé en ce que** la matière contient un liant fabriqué par hydrolyse et condensation d'un ou de plusieurs silanes et/ou d'un ou de plusieurs alcoxydes.

6. Procédé selon la revendication 4 ou 5, **caractérisé en ce que** le liant est fabriqué par hydrolyse au moyen d'au moins un acide aqueux organique ou inorganique.

7. Procédé selon l'une des revendications 1 à 6,
**caractérisé en ce que** la matière est étalée par frottement au moyen de têtes de polissage constituées de fibres et/ou de grains de minéraux et/ou de verre, liés à du plastique, de préférence en Al₂O₃, SiC, SiO₂ et/ou en un verre.
